# EUROPEAN PATENT SPECIFICATION

(11) **EP 0 435 403 B1**
(45) Date of publication and mention of the grant of the patent: **26.07.1995**
(21) Application number: 90203437.0
(22) Date of filing: 19.12.1990
(51) Int. Cl.: B60G 17/01, F16F 9/46

(54) **Suspension controller**
Aufhängungsregler
Contrôleur de suspension

(30) Priority: 26.12.1989 US 454309
(43) Date of publication of application: 03.07.1991
(73) Proprietor: GENERAL MOTORS CORPORATION, Detroit Michigan 48202 (US)
(72) Inventor: Hanson, Reed David, Dayton OH 45458 (US); Radcliffe, Scott Tyler, West Lafayette IN 47906 (US)
(74) Representative: Haines, Arthur Donald

(56) References cited:
- EP-A- 0 166 313
- EP-A- 0 306 819
- EP-A- 0 426 340
- WO-A-85/04698
- US-A- 3 807 678
- US-A- 4 763 222

## Description

This invention relates to a suspension controller for a wheeled vehicle having a body suspended on an unsprung, road contacting wheel.

A known active suspension includes an actuator capable of modifying the force between the vehicle body and wheel in response to a control signal in real time so as to produce a desired suspension behaviour.

A known semi-active suspension is similar but uses an actuator which provides only damping or dissipative forces so that the suspension generates its own force. It comprises an on/off damper having only two operating modes with fixed force/velocity curves: a first mode having a high damping force and a second mode having a low damping force. Such a suspension uses a valve capable of switching the damper between its first and second operating modes at frequencies at least twice the resonant wheel vibration frequency to achieve real time control of wheel as well as body motions.

A semi-active suspension controller of the type described above has been disclosed, in theory in the paper entitled "The Experimental Performance of an 'on-off' active damper" by E.J. Krasnicki in the Proceedings of the 51st Shock and Vibration Symposium in San Diego, California, in October 1980. This suspension is a modification of the semi-active suspension controller previously described by Dean Karnopp et al in "Vibration Control Using Semi-Active Force Generators", ASME Paper No. 73-DET-122, June, 1974 and related to the disclosure of U.S. Pat. No. 3,807,678. The suspension as described by Krasnicki includes a controller which repeatedly calculates a desired actuator force and determines if the power generated by this force should be active or dissipative. If the power should be active, which a damper cannot provide, the controller actuates the valve to the second mode of operation to provide minimum (zero) damping. If the power should be dissipative, the controller actuates the valve to the first mode of operation to provide high damping.

More specifically, Krasnicki discloses a method and apparatus for controlling a damper connected to provide a damping force between a body and a wheel of a vehicle, the damper comprising a valve switchable in response to a damper control signal between a first mode providing a low damping force and a second mode providing a high damping force in dependence upon the value of the damper control signal; the method and apparatus deriving, from one or more vehicle suspension-related operating variables, a plurality of damper control signals each having a first or a second value.

An improved on/off semi-active suspension controller is described in our copending European patent application No.90311498.1 (EP-A-426 340, published 08.05.91). The disclosure in this patent application describes a controller including an on/off damper which is switchable between its high and low damping modes at a frequency at least twice the resonant wheel vibration frequency and preferably higher, perhaps up to 50 Hz. However, response of the damper at frequencies higher than 50 Hz is not necessary for suspension control and would only add to the cost of the system. The controller described is incorporated in a digital processing system which completes a cycle and provides a new output signal for each on/off damper once every 1 millisecond. Since the damper signal is a single digital bit for selection of the high or low damping mode, this corresponds to a maximum output frequency of 500 Hz. It is not desirable to apply a standard low pass filter, which would introduce phase delay, since a fast transient response to the initiation of a large low frequency input is desired for good system response to major road perturbations or vehicle maneuvers. However, on a comparatively smooth road, there is still a significant low amplitude input at high frequencies which can produce a high frequency damper signal (100-500 Hz). This high frequency damper signal, if provided to the damper unprocessed, would result in no useful suspension performance improvement but might cause unnecessary damper valve actuation which could shorten its useful life.

Therefore, it is desirable in some instances to filter this signal in a way that limits its frequency while still providing fast transient response.

According to an aspect of the invention, there is provided a suspension controller for a vehicle characterised over the disclosure in the above-mentioned Krasnicki article by the features in the characterising portion of claim 1.

The suspension controller provides a filter for the damper signal which prevents the damper from switching damping modes more than once within a predetermined time period. However, a change in value in the damper signal which has been unchanged for the predetermined time is allowed to switch the damper immediately. Thus unnecessary high frequency switching of the valve is reduced, but the damper responds without unnecessary delay to signals within the activation frequency range.

Preferably the signals involved are binary signals which will prevent switching at high frequencies but will pass without delay the initiation of a change which does not originate in a high frequency signal.

Preferably, the first value of the unfiltered damper signal is produced, by processing means, when active damping power is required, for example to produce the body/wheel force needed to provide a desired suspension behaviour; and the second value thereof is produced when dissipative damping power is required, for example to produce at least some times the body/wheel force needed to provide a desired suspension behaviour.

According to another aspect of the present invention, there is provided a method of controlling a damper as defined in claim 4.

An embodiment of the present invention is described below, by way of illustration only, with reference to the accompanying drawings, in which:
Figure 1 is a schematic diagram of a motor vehicle fitted with an embodiment of suspension apparatus;
Figure 2 is a cross-sectional view of a variable damper for use as a suspension actuator in the suspension apparatus of Figure 1;
Figure 3 is a typical set of force/velocity curves for the variable damper of Figure 2;
Figure 4 is a block diagram of a controller for use in the suspension apparatus of Figure 1;
Figure 5 is a flow chart illustrating the operation of an output filter portion of the suspension apparatus of Figure 1;
Figures 6a and 6b show timing diagrams giving examples of unfiltered and filtered damper signals useful in understanding the operation of the output filter portion shown in Figure 5.

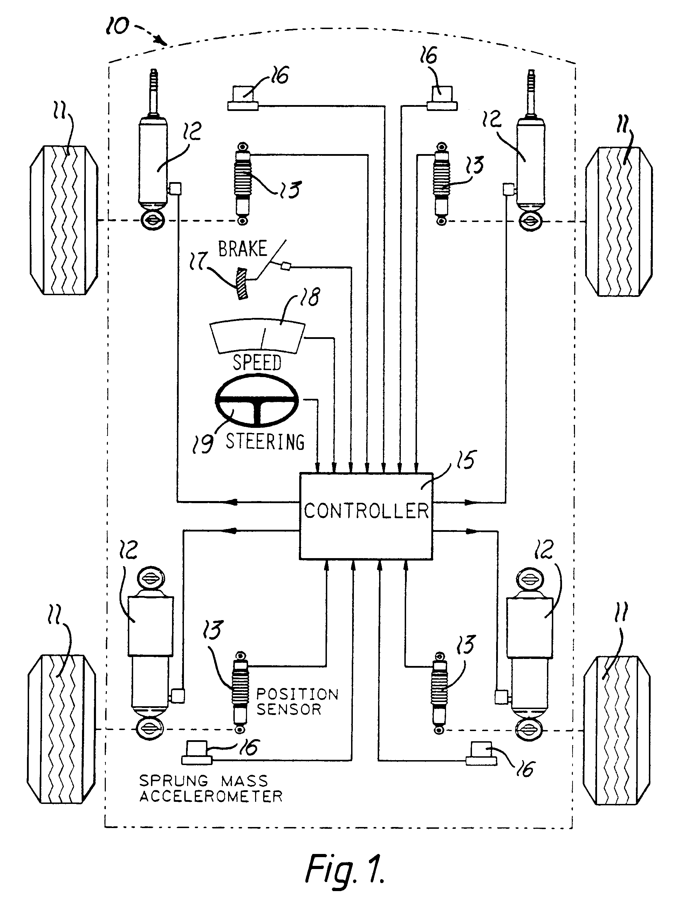

Figure 1 shows a schematic diagram of a motor vehicle fitted with an embodiment of suspension apparatus. The vehicle comprises a body 10 which can be thought of as a sprung mass, and four wheels 11 which, together with some of the vehicle suspension parts, form an unsprung part of the vehicle. Body 10 is generally rectangular in shape and is supported at each corner, or suspension point on a wheel 11 by means of suspension apparatus 12. The suspension apparatus 12 comprises for each suspension point a weight-bearing suspension spring connected in parallel with a suspension actuator. Each actuator is disposed so as to exert a controllable force on the body 10 and wheel 11 at its respective suspension point in parallel with the spring.

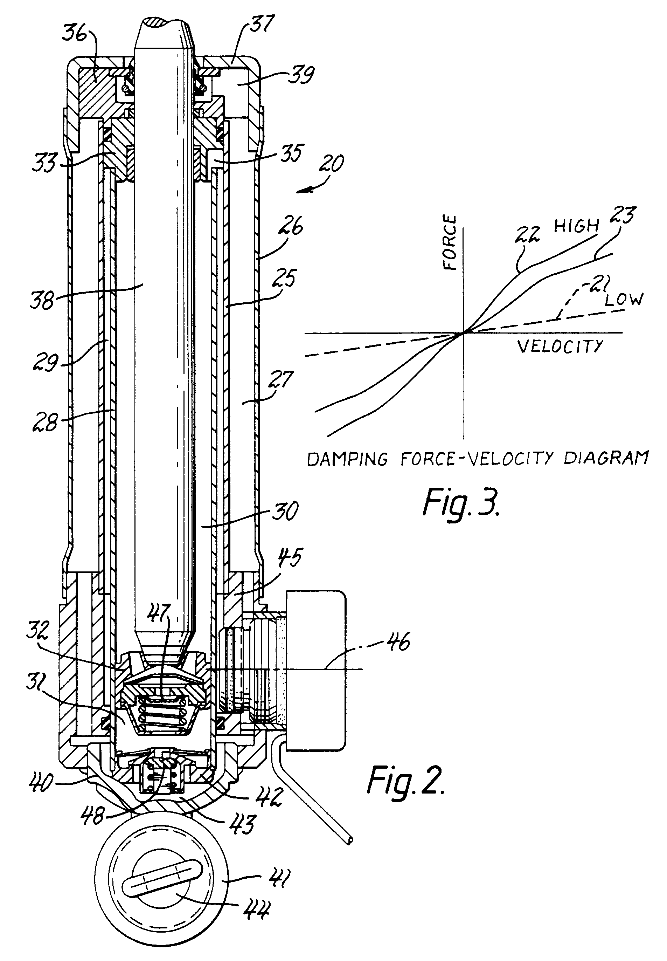

The suspension actuator may be a variable damper of the on/off type, such as damper 20 described in more detail below, with reference to Figures 2 and 3. In Figure 1, apparatus 12 is shown simply as a damper, although it is to be understood that a spring, such as a standard coil suspension spring, is connected in parallel with it.

Suspension apparatus 12 further includes an axle for rotatably supporting wheel 11 and such other suspension parts, for example control arms, as are commonly provided in suspension systems. These suspension parts are thus not described in detail herein.

At each suspension point, a suspension position sensor 13 is connected between the body and the wheels to measure the relative vertical position between them, and is adapted to generate an output signal indicative of this measure for input to a controller 15. A position sensor suitable for this purpose is the sensor known as the LVDT sensor available from, among others, Nartron Corporation of Reed City, Michigan.

The signal output by each position sensor 13 may be differentiated to produce a relative body/wheel vertical velocity signal.

An accelerometer 16 is also positioned at each suspension point of body 10 to generate a vertical acceleration signal for its respective suspension point and is, in this embodiment an absolute acceleration signal. This is input into controller 15.

An accelerometer suitable for use in this system is made by First Inertia Corporation of Hampshire, England. This accelerometer is of the type which gives an absolute measure of acceleration and, as with many such accelerometers, should be mounted with care so as to minimize cross-axis sensitivity which might contaminate the vertical acceleration signal with horizontal acceleration information.

Integration of the absolute vertical acceleration signal by controller 15 provides a vertical body corner velocity signal for each suspension point. From the difference of these signals, controller 15 is able to compute the vertical wheel velocity.

Damper 20, shown in Figure 2, has a dual force/velocity curve of the type shown in Figure 3. It is a discrete variable damper of the type in which a standard vehicle shock or strut is modified by the addition of a bypass passage adapted to be opened or closed by a bypass valve which is capable of high frequency operation for real time, on/off damping control. With the bypass valve open, the damper has a low damping force curve such as curve 21 in Figure 3; while with the bypass valve closed, the damper has a high damping force curve, such as curve 22 of Figure 3.

Referring to Figure 2, variable damper 20 comprises inner and outer reservoir tubes 25 and 26, respectively, defining therebetween a reservoir 27. A central pressure cylinder 28 is located axially within inner reservoir tube 25 and defines with it an annular passage 29. The space within central pressure cylinder 28 is divided into upper and lower chambers 30 and 31, respectively, sealed from one another by an axially slidable piston 32. Upper chamber 30 and annular passage 29 are closed at their upper ends by a pressure closure member 33 which provides relatively unrestricted communication between chamber 30 and passage 29 through an opening 35. Reservoir 27 is closed at its upper end by a reservoir closure member 36 and an upper end cap 37.

Piston 32 is attached to the lower end of a reciprocating piston rod 38, which extends upward through openings in members 33, 36 and end cap 37 for attachment to a suspension point in the manner normal for shocks or struts. High pressure and lag seals are provided in members 33 and 36, respectively; and a lower pressure seal is provided in end cap 37 around piston rod 38. Since there will be some fluid leakage past the high pressure and lag seals, a return passage 39 is provided through reservoir closure member 36 to reservoir 27.

The lower end of damper 20 comprises an outer closure cap 40 rigidly attached to reservoir tubes 25 and 26 and pressure cylinder 28 and connected in the normal manner to a member of the unsprung part of the vehicle, more specifically to control arm 44, to which a wheel 11 is attached, by means of a standard fitting 41. An inner closure cap 42 closes the bottom of lower chamber 31 and defines a lower reservoir chamber 43 between closure caps 40 and 42 which is open to reservoir 27.

A lower closure member 45 closes the lower end of reservoir 27 and annular passage 29 and further provides mounting for an electrically activated bypass valve apparatus 46 which, in response to a signal from controller 15, controls communication between annular passage 29 and reservoir 27 by way of lower reservoir chamber 43. Since damper 20 is to respond to the control in real time to control wheel as well as body movements, valve 46 must be capable of moving between its closed and open positions at a frequency significantly greater than the resonant wheel (unsprung mass) vibration frequency, preferably at at least twice this frequency and more preferably higher. For example, a typical resonant wheel vibration frequency is 12 Hz. Thus, the valve of damper 20 should respond at least up to 24 Hz and preferably up to 50 Hz. A valve suitable for use as valve 46 is a solenoid cartridge valve such as the Waterman Hydraulics (R) Series 12, a normally closed valve with a 19 litres per minute capability.

Piston 32 contains standard shock piston valve and orifice apparatus 47 including one or more throttling orifices, a rebound blowoff valve and a compression check valve. Inner closure cap 42 contains standard shock base valve apparatus 48 including one or more throttling orifices, a compression blowoff valve and a rebound check valve. These valves and orifices provide compression and rebound damping force characteristics of the type well known in the art and, specifically, adapted produce the high damping force curve 22 of Figure 3 when the bypass valve apparatus 46 is closed, so as to prevent direct communication between annular passage 29 and reservoir 27.

Typically, in extension or rebound, upward movement of piston 32 causes throttled flow through the orifices and, at high velocity, movement of the blowoff valve of piston 32. This flow is equal to the decrease in the annular volume of upper chamber 30; and a flow of fluid to compensate for the volume of displaced piston rod 38 is drawn into lower chamber 31 from reservoir 27 in a relatively unrestricted manner through the check valve of base valve apparatus 48.

Likewise, in compression, downward movement of piston 32 drives fluid out of lower chamber 31 in a relatively unrestricted manner through the check valve of piston valve and orifice apparatus 47. The fluid flow comprises a component equal to the increase in the annular volume of upper chamber 30 through the orifice apparatus 47, plus a component equal to the volume of displaced piston rod 38 through the base valve apparatus 48. At high velocity, the blowoff valve of base valve apparatus 48 is moved off its valve seat.

With bypass valve apparatus 46 open to allow direct communication between annular passage 29 and reservoir 27, the apparatus will produce the low damping force curve 21 of Figure 3. In extension, the displaced fluid from upper chamber 30 finds a comparatively unrestricted flow path through the open valve of apparatus 46 into reservoir 27; and the full increase in volume of lower chamber 30 flows relatively unrestricted from reservoir 27 through the check valve of base valve assembly 48 into lower chamber 30. In compression, a fluid flow equal to the full decrease in volume of lower chamber 31 finds relatively unrestricted passage through the check valve of piston valve and orifice assembly 47; and a flow equal to the volume of the displaced rod 38 finds relatively unrestricted passage from upper chamber 30 through the open valve of apparatus 46 into reservoir 27.

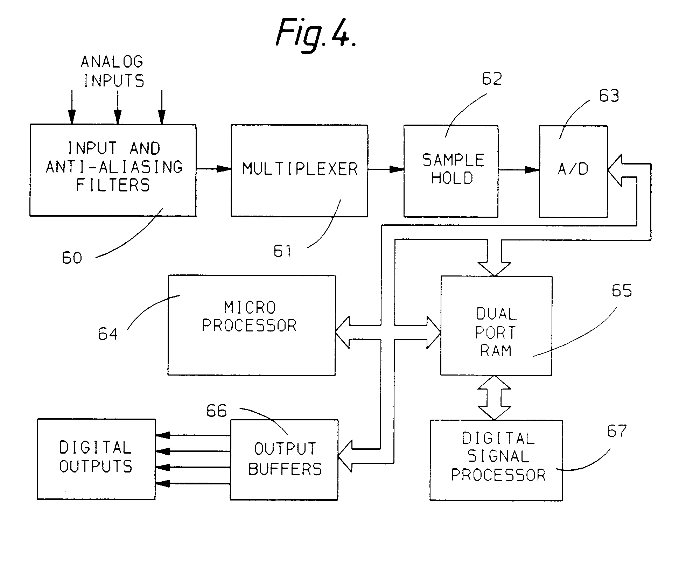

The hardware configuration of controller 15 is shown in schematic and block diagram form in Figure 4. The analog inputs from sensors 13, 16, and 17-19 are processed in input apparatus 60, which includes sensor interface circuitry, anti-aliasing filters and any additional analog signal processing circuitry such as circuittry for differentiating the relative position signals from sensors 13 to form relative velocity signals. The integration of the body corner acceleration signals from sensors 16 may also be performed by this circuitry but is preferably performed in software within the digital circuitry to be described.

With regard to the input signals, it should be noted that the controller has been found to work well, at least in the case of an on/off damping actuator, with a loop frequency of 1 KHz, which means that, to avoid aliasing distortion, the input signals should be filtered through a low-pass filter to avoid any significant input signals at frequencies above 500 Hz.

The differentiator, especially, should be designed with care, since differentiation, by nature, accentuates the high frequencies in the signal and heavy filtering tends to introduce phase delays which can slow system response.

The processed and filtered input signals are read into the system by a multiplexer 61, which feeds each signal in turn to a sample-and-hold circuit 62 and to an analog-to-digital (A/D) converter 63. The signals can be pipelined through this portion of the apparatus to speed data read-in.

The output of the A/D converter 63 is fed to an eight-bit data bus which is connected to a microprocessor 64, RAM 65 and output buffers 66. A separate 16-bit data bus connects dual port RAM 65 to a digital signal processor 67.

Microprocessor 64, which may for example be one of the 68HC11 family made by the Motorola (R) Corporation, contains the basic system operating software and controls the data handling and decision making tasks of the controller. The signal processor 67, which may be a TMS320C15 or TMS320C17 processor made by Texas Instruments (R) Corporation, is optimized for mathematical computations such as multiplication, which would greatly slow down a general purpose microprocessor. Such multiplications are used both in the solution of the control equations and in a digital integration routine.

Output buffers 66 interface the apparatus with the four actuators 12 and may further include digital low pass filtering to prevent output of signals at frequencies higher than those to which the actuators 12 are adapted to respond. For the embodiment shown, output buffers 66 need only be digital buffers, since the output control signals to the actuators are single-bit digital signals selecting high or low damping. In a continuous active or semi-active system, however, suitable digital-to-analog converters would be inserted before the output buffers 66. A more complete description of the apparatus can be found in the paper "Dual Processor Automotive Controller" by Kamal N. Majeed, published in the proceedings of the IEEE/Applications of Automotive Electronics, Dearborn, Michigan, Oct. 19, 1988. However, cost savings may be achieved in a mass produced system by the replacement of the dual port RAM 65 with ordinary RAM and the use of a software controlled interface bus between the microprocessor and the signal processor 67 and a three-line serial interface for input and output.

The control implemented by controller 15 is similar to that described in the aforementioned European patent application 90311498.1. This patent application shows how state equations based on a suspension model are solved during each program to provide a desired force at each wheel. For each such force, it is determined whether this force should generate active power, supplied to the damper, or dissipative power. This may be accomplished, for example, by comparing the sign of the desired force and the sign of the relative body/wheel velocity. If they are the same, active power is required which is not possible with a damper. Therefore, the unfiltered damper signal is set at its first value which, if applied to the damper, would produce minimum damping. If the signs are opposite, the power should be dissipative; and the unfiltered damper signal is set according to a threshold reference for the desired force. If the desired force does not exceed the threshold reference, the unfiltered damper signal is set to its first value for minimum damping. However, if the desired force exceeds the threshold reference, the unfiltered signal is set to its second value which, if applied to the damper, would produce the maximum damping condition.

In the embodiment described herein, the control program derives an unfiltered damper signal of one bit for each damper during each 1 millisecond cycle. If provided to a damper 20, each signal will attempt to cause the bypass valve to move between open and closed positions whenever the signal changes its state. If the signal changes state on each consecutive cycle, this would cause the bypass valve to open and close at a frequency of 500 Hz. However, changes at frequencies greater than about 50 Hz produce no discernible suspension behaviour benefit and instead tend to produce unnecessary actuation of the bypass valve, which might shorten its useful life. A simple method of filtering out the high frequency switching would be to sample the output at a lower rate, such as every fifth unfiltered damper signal, while ignoring all intermediate unfiltered damper signals. However, this method, as with all simple low pass filters, introduces a time delay (in this case, 5 milliseconds) to any commanded actuator action; and this delay is undesirable and unnecessary when the actuator has not changed its state for the previous 5 millisecond period.

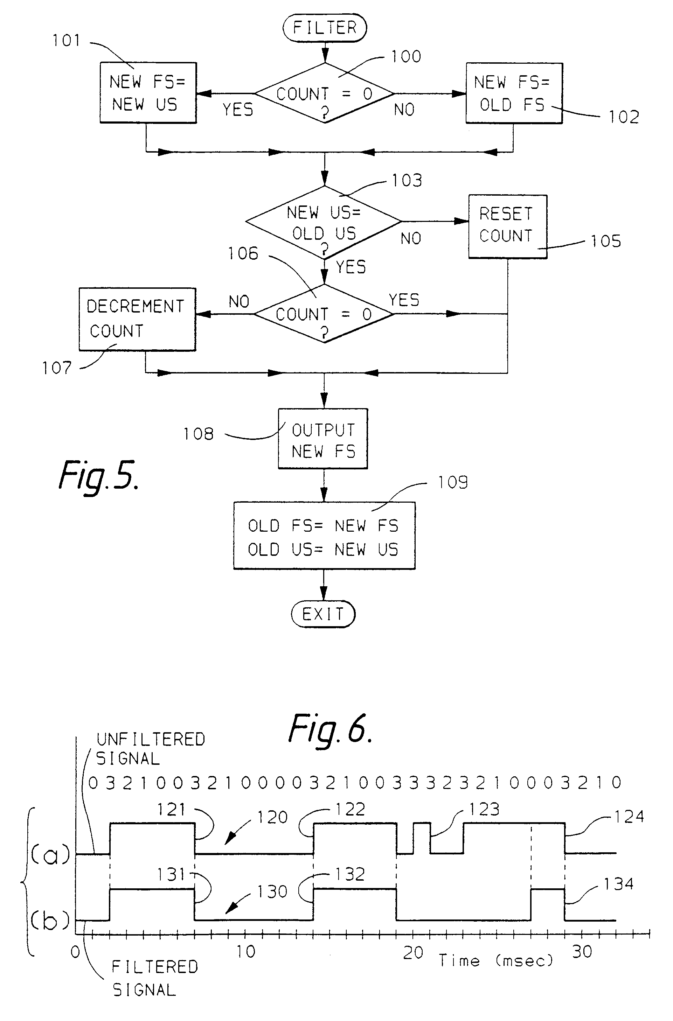

The controller 15 is adapted to carry out a filtering routine to filter the binary damper signals and to generate filtered damper signals on the basis of the above. An embodiment of this routine is described in the flow chart of Figure 5 and the accompanying timing diagrams of Figures 6a and 6b. The routine uses a timer which conveniently takes the form of a preset integer value which is loaded into a register or RAM location in a reset operation and which is decremented towards zero by one each control cycle. Since the computer repeats the program at a constant rate, the timer has a time period determined by the cycle rate and the initial preset value. The routine may be described briefly as follows:
(1) In each cycle, the value of the timer is checked. If it is zero, the filtered damper signal is changed to the same state as the unfiltered damper signal. If it is not zero, the filtered damper signal is not changed;
(2) The timer is reset to the preset value in any cycle in which the unfiltered damper signal changes state and is decremented toward zero in any cycle in which the unfiltered damper signal does not change state.

Referring to Figure 5, the routine first determines (100) if the value has reached zero. If so, it sets (101) the new filtered damper signal NEW FS equal to the new unfiltered damper signal NEW US. However, if the count is anything other than zero, the routine sets (102) the new filtered damper signal NEW FS equal to the old filtered damper signal OLD FS. Next, the routine detects change in the unfiltered damper signal by determining (103) if the new unfiltered damper signal NEW US equals the old unfiltered damper signal OLD US. If they are not equal, that is, the unfiltered signal has changed, the count is reset (105) to the predetermined value, in this example 3. If they are equal, no change has occurred, so the value is decremented towards zero. This may be accomplished by checking (106) to see if the count is zero and decrementing the count (107) if it is not. Finally, the new filtered damper signal value NEW FS is output to the damper (108) and the new values of unfiltered and filtered damper signals are used to replace the old values for the next cycle. The routine is then exited.

It can be seen that the filtered damper signal may be changed only when the unfiltered damper signal has been unchanged for a sufficiently long period: four cycles in this example. However, if the unfiltered damper signal has been unchanged for this period, the filtered damper signal may be changed immediately with a change in the unfiltered damper signal. This provides a desired activation frequency range within which the damper 20 can operate. As will be apparent, the desired activation frequency range can be changed by changing the value to which the counter is reset.

A sample unfiltered damper signal is shown in curve 120 of Figure 6a; and its corresponding filtered damper signal produced by the routine described above is shown in curve 130 of Figure 6b. As will be apparent to the skilled person, the filtered signal will be slightly delayed with respect to the unfiltered signal as a cause of the time taken for processing. For the sake of simplicity, this delay has not been shown in Figure 6.

The value at each one millisecond cycle of the control program is shown directly above curve 120 for an initial value of 3. The features of these curves can be described, for convenience, as positive-going pulses having variable durations. Pulses 121 and 122 of the unfiltered damper signal curve 120 generate similar pulses 131 and 132 in the filtered damper signal of curve 130 since they are longer in duration and in separation than the four millisecond counting time. However, pulse 123 of curve 120 is ignored entirely in the filtered damper signal, since it is only one millisecond in duration. In addition, pulse 134 of the filtered damper signal curve 130 is delayed and correspondingly shortened as compared with its corresponding unfiltered pulse 124 of curve 120, since pulse 124 followed pulse 123 too closely to allow the value to be decremented to zero. Pulse 134 of filtered curve 130 could therefore not begin until the value reached zero after having been reset at the beginning of pulse 124 in unfiltered curve 120. The apparatus thus prevents passage of high frequency unfiltered damper signals of the type shown in curve 120, from the end of pulse 122 through pulse 123 to the beginning of pulse 124; but, where the signals are low frequency, such as pulses 121 and 122, the apparatus passes the signals with substantially no delay. It will be noted that a longer, low frequency pulse having its initiation in a high frequency portion of the curve, such as pulse 124 of curve 120, will be delayed when passed by the apparatus, as seen in pulse 134 of curve 130. This is unavoidable, since its beginning is indistinguishable from the high frequency portion of the curve in which it is initiated; and it does not become apparent that it is a long duration pulse until the value reaches zero.

Additional signals which may optionally be generated are a vehicle deceleration or braking signal by brake sensor 17, a vehicle speed signal from vehicle speed sensor 18 and a vehicle steering signal from vehicle steering sensor 19. These latter signals are not used in the embodiment of suspension controller described above so have not been described in detail. However, many examples of such sensors and their uses for suspension control are known in the prior art and their application in a suspension controller of the type described will be apparent to the skilled person.

## Claims

1. A suspension controller for a vehicle, which vehicle comprises a body (10) and a wheel (11) connected by a damper (12,20) effective to apply a damping force therebetween, the damper (12,20) including a valve (46) switchable in response to a filtered damper control signal between a first mode providing a low damping force and a second mode providing a high damping force in dependence upon the value of the filtered damper control signal; the suspension controller comprising processing means (60-65) effective to derive, from one or more vehicle suspension-related operating variables, a plurality of unfiltered damper control signals each having a first value or a second value; characterised in that the valve (46) is switchable at frequencies within an activation frequency range at least twice the resonant wheel vibration frequency; in that said operating variables are sensed at a rate significantly greater than the activation frequency range; in that the processing means (60-65) is effective to derive the unfiltered damper control signals at a rate significantly greater than the activation frequency range; by a timer (105,106); and by filter apparatus (100-105, 108-109) effective to derive the filtered damper control signal from each successive unfiltered damper control signal by (1) resetting the timer each time the unfiltered damper control signal changes value, (2) causing the filtered damper control signal to be the same value as the unfiltered damper control signal if the time elapsed from the reset time has reached or exceeded a predetermined length, and (3) maintaining the filtered damper control signal value unchanged if the time elapsed has not reached the predetermined length.

2. A suspension controller according to claim 1, wherein the timer (105,106) is adapted to be active for the predetermined length after reset and to be inactive otherwise.

3. A suspension controller according to claim 1 or 2, wherein the first value of the unfiltered damper control signal is produced when active damping power is required and the second value thereof is produced when dissipative damping power is required.

4. A method of controlling a damper (12,20) connected to provide a damping force between a body (10) and a wheel (11) of a vehicle, the damper (12,20) comprising a valve (16) switchable in response to a filtered damper control signal at frequencies within an activation frequency range at least twice the resonant wheel vibration frequency between a first mode providing a low damping force and a second mode providing a high damping force in dependence upon the value of the filtered damper control signal; the method comprising the steps of deriving at a rate substantially greater than the activation frequency range, from one or more vehicle suspension-related operating variables sensed also at a rate substantially greater than the activation frequency range, a plurality of unfiltered damper control signals each having a first value or a second value; resetting a reference time when the unfiltered damper control signal changes value; for each derived unfiltered damper control signal, causing the filtered damper control signal to have the same value as the unfiltered damper control signal if the time elapsed from the reference time has reached or exceeded a predetermined length, and causing the filtered damper control signal to have a value unchanged from the preceding filtered damper control signal if the time elapsed from the reference time has not reached the predetermined length; and applying the filtered damper control signal to the damper so as to apply a damping force between the vehicle body (10) and wheel (11).

5. A method according to claim 4, wherein the time is measured with a timer, the timer being reset when the unfiltered damper control signal changes value, thereby resetting the reference time.

6. A method according to claim 5, wherein the timer is active for the predetermined length after being reset and is otherwise inactive.

## Patentansprüche

1. Ein Aufhängungsregler für ein Fahrzeug, welches Fahrzeug eine Karosserie (10) und ein Rad (11) umfaßt, die durch einen Dämpfer (12, 20) verbunden sind, der wirksam ist, um eine Dämpfungskraft dazwischen anzulegen, wobei der Dämpfer (12, 20) ein Ventil (46) umfaßt, das im Ansprechen auf ein gefiltertes Dämpferregelsignal zwischen einem ersten Modus, der eine niedrige Dämpfungskraft vorsieht, und einem zweiten Modus, der eine hohe Dämpfungskraft vorsieht, in Abhängigkeit von dem Wert des gefilterten Dämpferregelsignals schaltbar ist; der Aufhängungsregler Verarbeitungsmittel (60-65) umfaßt, die wirksam sind, um aus einer oder mehreren fahrzeugaufhängungsbezogenen Betriebsvariablen eine Vielzahl von ungefilterten Dämpferregelsignalen jedes mit einem ersten Wert oder einem zweiten Wert herzuleiten; dadurch gekennzeichnet, daS das Ventil (46) mit Frequenzen innerhalb eines Aktivierungsfrequenzbereiches zumindest zweimal die resonante Radvibrationsfrequenz schaltbar ist; dadurch, daß die Betriebsvariablen mit einer Rate, die signifikant größer als der Aktivierungsfrequenzbereich ist, erfaßt werden; dadurch, daß das Verarbeitungsmittel (60-65) wirksam ist, um die ungefilterten Dämpferregelsignale mit einer Rate herzuleiten, die signifikant größer als der Aktivierungsfrequenzbereich ist; durch eine Zeitbestimmung (105, 106); und durch eine Filtervorrichtung (100-105, 108-109), die wirksam ist, um das gefilterte Dämpferregelsignal von jedem sukzessiven ungefilterten Dämpferregelsignal herzuleiten, indem (1) die Zeitbestimmung zu jeder Zeit, zu der das ungefilterte Dämpferregelsignal den Wert ändert, zurückgesetzt wird, (2) das gefilterte Dämpferregelsignal dazu veranlaßt wird, den gleichen Wert wie das ungefilterte Dämpferregelsignal aufzuweisen, wenn die von der Rücksetzzeit verstrichene Zeit eine vorbestimmte Länge erreicht oder überschritten hat, und (3) der gefilterte Dämpferregelsignalwert unverändert bleibt, wenn die verstrichene Zeit die vorbestimmte Länge nicht erreicht hat.

2. Ein Aufhängungsregler nach Anspruch 1, worin die Zeitbestimmung (105, 106) dazu angepaßt ist, für die vorbestimmte Länge nach dem Zurücksetzen aktiv zu sein und ansonsten inaktiv zu sein.

3. Ein Aufhängungsregler nach Anspruch 1 oder 2, worin der erste Wert des ungefilterten Dämpferregelsignals erzeugt wird, wenn aktive Dämpfungsleistung erforderlich ist und der zweite Wert davon erzeugt wird, wenn dissipative Dämpfungsleistung erforderlich ist.

4. Ein Verfahren des Regelns eines Dämpfers (12, 20), der geschaltet ist, um eine Dämpfkraft zwischen einer Karosserie (10) und einem Rad (11) eines Fahrzeuges vorzusehen, wobei der Dämpfer (12, 20) ein Ventil (16) umfaßt, das im Ansprechen auf ein gefiltertes Dämpferregelsignal mit Frequenzen innerhalb eines Aktivierungsfrequenzbereiches zumindest zweimal die resonante Radvibrationsfrequenz zwischen einem ersten Modus, der eine niedrige Dämpfungskraft vorsieht, und einem zweiten Modus, der eine hohe Dämpfungskraft vorsieht, in Abhängigkeit von dem Wert des gefilterten Dämpferregelsignals schaltbar ist; wobei das Verfahren die Schritte umfaßt, daß mit einer Rate, die wesentlich größer als der Aktivierungsfrequenzbereich ist, aus einer oder mehreren fahrzeugaufhängungsbezogenen Betriebsvariablen, die ebenfalls mit einer Rate wesentlich größer als der Aktivierungsfrequenzbereich erfaßt werden, eine Vielzahl von ungefilterten Dämpferregelsignalen, jedes mit einem ersten Wert oder einem zweiten Wert, hergeleitet werden; eine Referenzzeit zurückgesetzt wird, wenn das ungefilterte Dämpferregelsignal den Wert ändert; für jedes hergeleitete ungefilterte Dämpferregelsignal veranlaßt wird, daß das gefilterte Dämpferregelsignal den gleichen Wert wie das ungefilterte Dämpferregelsignal aufweist, wenn die Zeit, die seit der Referenzzeit verstrichen ist, eine vorbestimmte Länge erreicht oder überschritten hat, und das gefilterte Dämpferregelsignal dazu veranlaßt wird, einen Wert aufzuweisen, der von dem vorhergehenden gefilterten Dämpferregelsignal ungeändert ist, wenn die von der Referenzzeit verstrichene Zeit die vorbestimmte Länge nicht erreicht hat; und das gefilterte Dämpferregelsignal an den Dämpfer angelegt wird, um so eine Dämpfungskraft zwischen die Fahrzeugkarosserie (10) und das Rad (11) anzulegen.

5. Ein Verfahren nach Anspruch 4, worin die Zeit mit einem Zeitmesser gemessen wird, wobei der Zeitmesser zurückgesetzt wird, wenn das ungefilterte Dämpferregelsignal den Wert ändert, wodurch die Referenzzeit zurückgesetzt wird.

6. Ein Verfahren nach Anspruch 5, worin der Zeitmesser für die vorbestimmte Länge, nachdem er zurückgesetzt ist, aktiv ist, und andernfalls inaktiv ist.

## Revendications

1. Appareil de commande de suspension pour un véhicule, ledit véhicule comprenant une carrosserie (10) et une roue (11) connectées par un amortisseur (12, 20) susceptible d'appliquer une force d'amortissement entre elles, l'amortisseur (12, 20) comprenant une soupape (46) qui peut être permutée, en réponse à un signal de commande d'amortissement filtré, entre un premier mode fournissant une force d'amortissement basse et un deuxième mode fournissant une force d'amortissement élevée en fonction de la valeur du signal de commande d'amortissement filtré, l'appareil de commande de suspension comprenant des moyens de traitement (60 à 65) susceptibles de déduire d'une ou plusieurs variables d'exploitation rapportées à la suspension du véhicule, une série de signaux de commande d'amortisseur non filtrés dont chacun a une première valeur ou une deuxième valeur, caractérisé en ce que la soupape (46) peut être permutée à des fréquences qui se situent dans une plage de fréquences d'activation d'au moins deux fois la fréquence de vibration de résonance des roues, lesdites variables d'exploitation sont détectées à une cadence notablement supérieure à la plage de fréquences d'activation, en ce que les moyens de traitement (60 à 65) sont à même de déduire les signaux de commande d'amortisseur non filtrés à une cadence notablement supérieure à la plage de fréquences d'activation; l'appareil de commande comprenant une minuterie (105, 106) et un appareil de filtrage (100 à 105, 108, 109) susceptible de déduire le signal de commande d'amortisseur filtré de chaque signal de commande d'amortisseur non filtré successif (1) en remettant à zéro la minuterie chaque fois que le signal de commande d'amortisseur non filtré change de valeur, (2) en amenant le signal de commande d'amortisseur filtré à avoir la même valeur que le signal de commande d'amortisseur non filtré si le temps qui s'est écoulé depuis le moment de remise à zéro a atteint ou dépassé une longueur prédéterminée, et (3) en maintenant la valeur du signal de commande d'amortisseur filtré inchangé si le temps qui s'est écoulé n'a pas atteint la longueur prédéterminée.

2. Appareil de commande de suspension selon la revendication 1, dans lequel la minuterie (105, 106) est active pendant la longueur prédéterminée après remise à zéro et inactive autrement.

3. Appareil de commande de suspension selon la revendication 1 ou 2, dans lequel la première valeur du signal de commande d'amortisseur non filtré est produite lorsque la puissance d'amortissement active est nécessaire et sa deuxième valeur est produite lorsqu'une puissance d'amortissement dissipative est nécessaire.

4. Procédé de commande d'un amortisseur (12, 20) connecté pour fournir une force d'amortissement entre une carrosserie (10) et une roue (11) d'un véhicule, l'amortisseur (12, 20) comprenant une soupape (16) qui peut permuter en réponse à un signal de commande d'amortisseur filtré à des fréquences qui se situent à l'intérieur de la plage de fréquences d'activation d'au moins deux fois la fréquence de vibration de résonance de la roue entre un premier mode fournissant une force d'amortissement basse et un deuxième mode fournissant une force d'amortissement élevée en fonction de la valeur du signal de commande d'amortisseur filtré, le procédé consistant à déduire à une cadence sensiblement supérieure à la plage de fréquences d'activation d'une ou plusieurs variables d'exploitation rapportées à la suspension du véhicule également détectées à une cadence sensiblement supérieure à la plage de fréquences d'activation, une série de signaux de commande d'amortisseur non filtrés dont chacun a une première valeur ou une deuxième valeur; à remettre à zéro un temps de référence lorsque le signal de commande d'amortisseur non filtré change de valeur, pour chaque signal de commande d'amortisseur non filtré déduit, à amener le signal de commande d'amortisseur filtré à avoir la même valeur que le signal de commande d'amortisseur non filtré si le temps qui s'est écoulé depuis le temps de référence a atteint ou dépassé une longueur prédéterminée, à amener le signal de commande d'amortisseur filtré à avoir une valeur inchangée vis-à-vis du signal de commande d'amortisseur filtré précédent si le temps écoulé à partir du temps de référence n'a pas atteint la longueur prédéterminée, et à appliquer le signal de commande d'amortisseur filtré à l'amortisseur de manière à appliquer une force d'amortissement entre la carrosserie du véhicule (10) et la roue (11).

5. Procédé selon la revendication 4, dans lequel le temps est mesuré avec une minuterie, la minuterie étant remise à zéro lorsque le signal de commande d'amortisseur non filtré change de valeur, ce qui a pour effet de remettre à zéro le temps de référence.

6. Procédé selon la revendication 5, dans lequel la minuterie est active pour la longueur prédéterminée après avoir été remise à zéro et autrement inactive.
